# EUROPÄISCHE PATENTSCHRIFT

(11) **EP 3 184 373 B1**
(45) Veröffentlichungstag und Bekanntmachung des Hinweises auf die Patenterteilung: **09.11.2022**
(21) Anmeldenummer: 15307109.7
(22) Anmeldetag: 22.12.2015
(51) Int. Cl.: B60R 16/03, H02G 5/06

(54) **VERFAHREN UND ANORDNUNG ZUR STROMVERSORGUNG VON ELEKTRISCHEN VERBRAUCHERN EINES KRAFTFAHRZEUGS**
METHOD AND ASSEMBLY FOR SUPPLYING POWER FROM ELECTRICAL CONSUMERS OF A MOTOR VEHICLE
PROCEDE ET SYSTEME D'ALIMENTATION ELECTRIQUE DE CONSOMMATEURS ELECTRIQUES D'UN VEHICULE AUTOMOBILE

(43) Veröffentlichungstag der Anmeldung: 28.06.2017
(73) Patentinhaber: Nexans, 92400 Courbevoie (FR)
(72) Erfinder: STEINBERG, Helmut, 92721 STORNSTEIN (DE)
(74) Vertreter: Ipsilon

(56) Entgegenhaltungen:
- EP-A1- 2 703 229
- DE-A1-102011 018 353
- US-A1- 2002 163 219
- US-A1- 2015 107 870
- EXOcontralto: "How To Make Mini Buss Bars - Best 2 Deep Cycle Car Audio Batteries - Loud SPL Stereo System Install", YouTube , 16. Dezember 2009 (2009-12-16), XP054976612, Gefunden im Internet: URL:https://www.youtube.com/watch?feature= player_embedded&v=Lz7h06JIQpA [gefunden am 2016-06-14]

## Beschreibung

Die Erfindung bezieht sich auf ein Verfahren zur Stromversorgung von elektrischen Verbrauchern eines Kraftfahrzeugs sowie auf eine mit dem Verfahren hergestellte Anordnung.

Ein solches Verfahren mit entsprechender Anordnung geht beispielweise aus der EP 2 703 229 hervor.

In bekannter Technik sind die in einem Kraftfahrzeug - im Folgenden kurz "Fahrzeug" genannt - montierten elektrischen Leitungen beispielsweise in sogenannten Kabelbäumen bzw. Kabelsträngen jeweils zu einer Einheit zusammengefaßt. Die elektrischen Verbraucher eines Fahrzeugs sind über die elektrischen Leitungen mit der Spannungsquelle desselben verbunden, bei der es sich beispielsweise um einen Energiespeicher oder um eine Batterie handeln kann. Die Spannungsquelle wird im Folgenden als "Batterie" bezeichnet. Die elektrischen Leiter eines Kabelbaums haben unterschiedliche Längen und unterschiedliche Querschnitte. Wegen der meist großen Anzahl einzelner, zu einer Einheit zu verbindenden Leiter ist nicht nur die Herstellung eines Kabelbaums, sondern auch seine Verlegung im Fahrzeug aufwendig, wenn beispielsweise im Heckbereich befindliche Verbraucher mit der Batterie verbunden werden sollen.

Bei dem bekannten Verfahren nach der DE 102 20 303 A1 werden der Kabelbaum bzw. die Kabelbäume durch eine Bespeisungsplattform ersetzt, die aus mindestens zwei mit der Batterie eines Fahrzeugs elektrisch leitend verbundenen Karosserieelementen besteht. Die mit den elektrischen Verbrauchern verbundenen elektrischen Leiter werden an die Bespeisungsplattform angeschlossen. Die Schrift befaßt sich im Wesentlichen mit dem Aufbau und der Ausgestaltung der Bespeisungsplattform. Über die Art und Weise, wie die Leiter an deren Elemente angeschlossen sind, werden in der Schrift keine Angaben gemacht.

Aus der eingangs erwähnten EP 2 703 229 A1 gehen ein Verfahren und eine Anordnung zur Stromversorgung von in einem Kraftfahrzeug angeordneten elektrischen Verbrauchern hervor. Im Bodenbereich des Kraftfahrzeugs sind bei dieser Anordnung zwei stabile und elektrisch leitende Tragelemente angebracht, die mit einer im Kraftfahrzeug angeordneten Spannungsquelle verbunden werden. Die Tragelemente haben eine Doppelfunktion. Sie sind einerseits mechanisch stabiler Träger für die Aufbauten des Kraftfahrzeugs und andererseits elektrischer Leiter zum elektrisch leitenden Anschließen der Verbraucher. Die Tragelemente haben auf ihrer ganzen Länge voneinander getrennte Kontaktstellen zum Anschluß der Verbraucher. An den als in der elektrischen Verbindungstechnik üblich bezeichneten Kontaktstellen sind Bauteile angebracht. An den Enden von anzuschließendem Leiter sind ebenfalls Bauteile angebracht, die mit den Bauteilen der Tragelemente verbunden werden können.

Der Erfindung liegt die Aufgabe zugrunde, das eingangs geschilderte Verfahren und die mit demselben hergestellte Anordnung so zu gestalten, dass die mit den Verbrauchern verbundenen Leiter einfach an im Fahrzeug einzusetzende, elektrisch leitende Bauteile angeschlossen werden können, die selbst einfach aufgebaut sind.

Diese Aufgabe wird entsprechend der Gesamtheit der Merkmale des Patentanspruchs 1 bzw. gemäß den Ansprüchen 2 und 3 gelöst.

Für die Schienen und die Leiter können Aluminium oder eine Aluminiumlegierung eingesetzt werden. Der Einfachheit halber wird in der folgenden Beschreibung nur Aluminium erwähnt, stellvertretend auch für eine Aluminiumlegierung. Bei den Schienen handelt es sich um Bauteile, die zusätzlich zu allen anderen Einbauten und Geräten des Fahrzeugs in demselben angebracht werden.

Von wesentlicher Bedeutung für das Verfahren und die Anordnung ist, daß sowohl für die Schienen als auch für die Leiter Aluminium eingesetzt ist, wodurch das Gewicht der elektrischen Ausrüstung gegenüber herkömmlichen Ausrüstungen, die im Wesentlichen Kupfer als elektrisch leitendes Material aufweisen, erheblich reduziert ist. Wesentlich ist außerdem die Art der elektrischen Verbindung zwischen Schienen und Leitern, für welche keine gesonderten Kontaktteile eingesetzt werden. Die Leiter werden an den Anschlußpunkten vielmehr direkt mit den Schienen verschweißt.

Bei diesem Verfahren werden mindestens zwei aus Aluminium bestehende Schienen im Fahrzeug eingebracht, die wegen ihres Materials Aluminium ein relativ geringes Gewicht haben. Sie können auf einfache Art und Weise an geeigneter Stelle in einem Fahrzeug montiert und mit der Batterie desselben elektrisch leitend verbunden werden. Die Schienen werden vor ihrer Montage in ihrem Verlauf so geformt, dass sie der Form eines Fahrzeugs an der Montagestelle angepaßt sind. Die Montage der Schienen wird dadurch wesentlich erleichtert. Die Schienen sind im Wege der Vorfertigung auf ihrer ganzen Länge mit Anschlußpunkten ausgerüstet, an denen ebenfalls aus Aluminium bestehende und daher leichte elektrische Leiter angeschweißt werden können. Das ist dadurch besonders einfach, dass an den Anschlußpunkten zumindest Vertiefungen in den Schienen angebracht sind, in welche die Leiter mit ihren stirnseitigen Enden eingesetzt werden können. Die Vertiefungen sind mit Vorteil so ausgeführt, dass die Leiter in denselben nicht seitlich ausweichen können.

Die Vertiefungen haben eine etwa kreisförmige lichte Weite und eine in Umfangsrichtung verlaufende Wandung, welche eine für einen in eine Vertiefung eingesetzten elektrischen Leiter dienende Begrenzung darstellt. Der elektrische Leiter ist dann jeweils so geführt, dass er nicht in radialer Richtung ausweichen kann.

Die elektrischen Leiter können als Massivleiter oder als aus Einzeldrähten bestehende Litzenleiter ausgeführt sein. Die Enden der Litzenleiter werden mit Vorteil so vorbehandelt, dass die Einzelleiter in einem einteiligen Körper elektrisch leitend miteinander verbunden sind.

In diesem Sinne können die Vertiefungen mit Vorteil als Hülsen oder Näpfe ausgebildet werden, die durch einen vom Material der jeweiligen Schiene gebildeten Boden einseitig verschlossen sind.

In einer weiteren vorteilhaften Ausgestaltung der Schienen können deren Anschlußpunkte auch als Durchgangslöcher ausgeführt sein, in welche die Enden der mit den Schienen zu verbindenden elektrischen Leiter sehr einfach eingesteckt werden können.

Die Schienen sind mit Vorteil rundum und über ihre ganze Länge von einer Isolierung umgeben, durch welche sie gegenüber den Aufbauten des Fahrzeugs und insgesamt berührungssicher abgedeckt sind. Geeignete Isoliermaterialien sind beispielsweise Silikon, Polyethylen, Polyurethan, Polyamid, Polypropylen und Keramik. Die Stellen der Anschlußpunkte der Schienen, an denen vor ihrer Montage noch keine elektrischen Leiter angeschlossen sind, werden zweckmäßig außen auf der Isolierung markiert.

Das Verfahren und die Anordnung nach der Erfindung werden anhand der Zeichnungen in Ausführungsbeispielen erläutert.

Es zeigen:
Fig. 1 in schematischer Darstellung eine Seitenansicht eines Fahrzeugs.
Fig. 2 ebenfalls in schematischer Darstellung eine Anordnung nach der Erfindung.
Fig. 3 bis 7 Einzelheiten der Anordnung nach Fig. 2 in vergrößerten Darstellungen. Die Fig. 6 und 7 sind dabei zwei unterschiedliche Querschnitte der Fig. 5 entlang der Linie VI - VI.

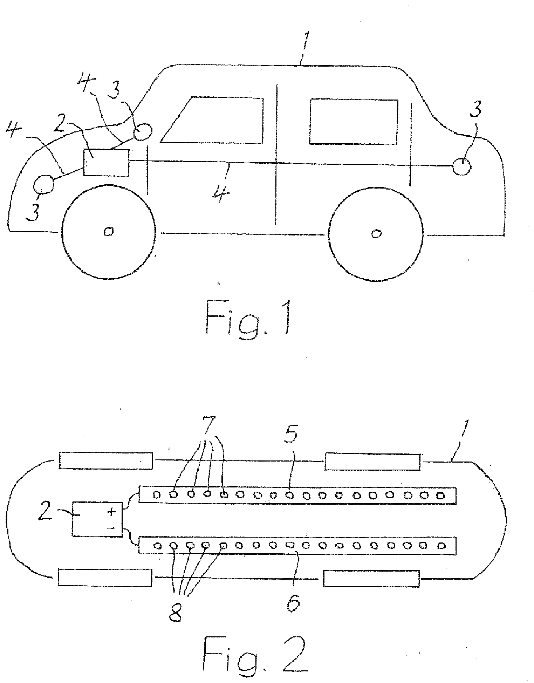

Das in Fig. 1 schematisch dargestellte Fahrzeug 1 soll ein PKW sein. Es hat im dargestellten Ausführungsbeispiel eine im Motorraum angeordnete Batterie 2 und eine Vielzahl von elektrischen Verbrauchern 3, von denen nur drei an unterschiedlichen Positionen im Fahrzeug 1 befindliche als Kreise eingezeichnet sind. Alle Verbraucher 3 sind über aus Aluminium bestehende isolierte elektrische Leiter 4 elektrisch leitend mit der Batterie 2 verbunden. Das Fahrzeug 1 kann auch eine andere Form als ein PKW haben und es kann auch weniger oder mehr als vier Räder aufweisen. Es kann beispielsweise auch ein Transporter oder ein Bus sein.

In Fig. 2 ist nur der Bodenbereich des Fahrzeugs 1 schematisch dargestellt. Jedwede Aufbauten sind der Übersichtlichkeit halber fortgelassen. In diesem Bodenbereich sind im dargestellten Ausführungsbeispiel zwei Schienen 5 und 6 angebracht, die sich im wesentlichen über die ganze Länge des Fahrzeugs 1 erstrecken. Die Schienen 5 und 6 werden mit Vorteil im Bodenbereich des Fahrzeugs 1 montiert. Sie können auch mit entsprechender schützender Abdeckung außen am Boden des Fahrzeugs angebracht werden. Es können grundsätzlich auch mehr als zwei Schienen im bzw. am Fahrzeug 1 angeordnet werden, die gegebenenfalls in geeigneter Weise elektrisch miteinander verbunden sind. Jede Schiene 5 bzw. 6 ist mit einem Ende mit einem der Pole der Batterie 2 verbunden.

Die Batterie 2 ist im dargestellten Ausführungsbeispiel im Bereich eines Endes des Fahrzeugs 1 angeordnet. Die Schienen 5 und 6 können entsprechend der zeichnerischen Darstellung jeweils einstückig ausgebildet sein. Wenn die Batterie 2 beispielsweise im mittleren Bereich des Fahrzeugs 1 angebracht ist, können die Schienen 5 und 6 auch jeweils aus zwei Teilen bestehen, die sich auf unterschiedlichen Seiten der Batterie 2 jeweils bis zu einem Endbereich des Fahrzeugs 1 erstrecken.

Die Schienen 5 und 6 weisen auf ihrer ganzen Länge mit Abstand zueinander angeordnete Anschlußpunkte 7 bzw. 8 auf, an welche die zu den Verbrauchern 3 führenden elektrischen Leiter 4 direkt oder indirekt angeschlossen werden können. Die zu den Verbrauchern 3 führenden elektrischen Leiter 4 können einzeln an zwei komplementäre Anschlußpunkte 7 und 8 der unterschiedliche Polaritäten aufweisende Schienen 5 und 6 angeschlossen werden. Es ist auch möglich, zwei oder mehr elektrische Leiter 4 zusammenzufassen und gemeinsam direkt an zwei komplementäre Anschlußpunkte 7 und 8 anzuschließen. Das bietet sich insbesondere für den Anschluß der im Heckbereich oder im Motorraum des Fahrzeugs 1 befindlichen größeren Anzahl von Verbrauchern 3 an.

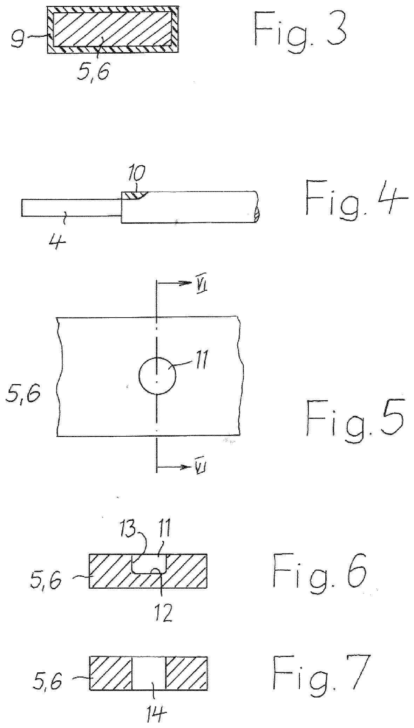

Die Schienen 5 und 6 haben mit Vorteil einen rechteckigen Querschnitt, so wie es in Fig. 3 dargestellt ist. Sie sind auf ihrer ganzen Länge von einer Isolierung 9 umgeben, die mit Vorteil aus den im Vorangehenden beschriebenen Materialien bestehen kann.

Die elektrischen Leiter 4 können als Massivleiter oder auch als Litzenleiter ausgeführt sein. Sie sind von einem Mantel 10 aus Isoliermaterial umgeben, der zum Anschluß eines Leiters an eine Schiene entsprechend Fig. 4 am Ende desselben entfernt ist. Wenn der Leiter 4 als aus Einzeldrähten bestehender Litzenleiter ausgeführt ist, wird sein stirnseitiges Ende vor der Montage zweckmäßig so vorbehandelt, daß an demselben ein einteiliger Körper gebildet ist, in welchem alle Einzeldrähte elektrisch leitend miteinander verbunden sind. Das kann beispielsweise durch Aufschmelzen des Endes des Litzenleiters bzw. der Enden aller Einzelleiter desselben erfolgen.

Die Schienen 5 und 6 haben - wie schon erwähnt - auf ihrer ganzen Länge Anschlußpunkte 7 bzw. 8, die mit Abstand zueinander angeordnet sind. Die Anschlußpunkte 7 und 8 sind zumindest als in den Schienen 5 und 6 angebrachte Vertiefungen 11 ausgeführt, die gemäß Fig. 5 mit Vorteil eine etwa kreisförmige lichte Weite haben. Die Vertiefungen 11 können mit Vorteil als Hülsen bzw. Näpfe ausgeführt sein, bei welchen es sich um durch einen Boden 12 verschlossene Löcher handeln kann. Der Boden 12 wird vom Material der Schienen 5 und 6 gebildet. Die Vertiefungen 11 haben eine in ihrer Umfangsrichtung verlaufende Wandung 13, welche als in radialer Richtung wirkende Begrenzung für einen in eine Vertiefung eingesetzten elektrischen Leiter 4 dient.

Die Anschlußpunkte 7 und 8 können gemäß Fig. 7 auch als Durchgangslöcher 14 ausgeführt sein. Zumindest ein Teil der Anschlußpunkte 7 und 8 kann ein Durchgangsloch sein.

Das Verfahren nach der Erfindung wird beispielsweise wie folgt durchgeführt:
Die Schienen 5 und 6 werden in der erforderlichen Länge und Form im Wege der Vorfertigung mit den als Vertiefungen 11 und/oder Durchgangslöchern 14 ausgeführten Anschlußpunkten 7 und 8 versehen. Ein elektrischer Leiter 4 wird zu seiner elektrisch leitenden Verbindung mit einer der Schienen 5 oder 6 in eine Vertiefung 11 bzw. in ein Durchgangsloch 14 derselben eingesetzt und durch Zufuhr von ausreichender Wärme mit der Schiene 5 bzw. 6 verschweißt. Dabei werden auf den Oberflächen von Schienen 5 bzw. 6 und elektrischen Leitern 4 vorhandene dünne Oxidschichten aufgebrochen, so daß sich einwandfreie, elektrisch leitende Verbindung zwischen dem Leiter 4 und der jeweiligen Schiene 5 bzw. 6 ergibt.

Die elektrischen Leiter 4 können in diesem Sinne an unterschiedlichen Anschlußpunkten der Schienen 5 und 6 mit denselben verbunden werden, bevor dieselben im Fahrzeug 1 montiert werden. Sie können aber auch erst dann an die Schienen 5 und 6 angeschlossen werden, wenn dieselben bereits im Fahrzeug 1 montiert sind. Dazu ist die die Schienen 5 bzw. 6 umgebende Isolierung 9 zweckmäßig mit Markierungen versehen, welche die Positionen der Anschlußpunkte 7 bzw. 8 markieren. Das gilt mit Vorteil auch für den Fall, dass nachträglich zusätzliche elektrische Leiter 4 an die Schienen 5 und 6 angeschlossen werden sollen.

## Patentansprüche

1. Verfahren zur Stromversorgung von elektrischen Verbrauchern (3) eines Kraftfahrzeugs (1), bei welchem mindestens zwei aus elektrisch leitendem Material bestehende, im Kraftfahrzeug (1) vorhandene Bauteile verwendet werden, an welche mit den Verbrauchern verbundene, elektrische Leiter (4) elektrisch leitend angeschlossen werden, bei welchem die Bauteile in Gebrauchslage mit einer Spannungsquelle (2) des Kraftfahrzeugs (1) verbunden werden, bei welchem als Bauteile aus Aluminium oder aus einer Aluminiumlegierung bestehende Schienen (5,6) im Kraftfahrzeug (1) angeordnet werden, die auf ihrer ganzen Länge mit mit Abstand zueinander angebrachten, vorbereiteten Anschlußpunkten (7,8) zum elektrisch leitenden Anschließen von elektrischen Leitern (4) ausgerüstet werden, nei welchem als Bauteile Schienen (5,6) mit etwa rechteckigem Querschnitt verwendet werden, die vor ihrer Montage in ihrem Verlauf so geformt werden, dass sie der Form des Kraftfahrzeugs (1) an der Montagestelle angepaßt sind und deren vorbereitete Anschlußpunkte (7,8) zumindest als im Material der Schienen (5,6) angebrachte Vertiefungen (11,14) ausgeführt werden, bei welchem die aus Aluminium oder aus einer Aluminiumlegierung bestehenden elektrischen Leiter (4) mit ihren stirnseitigen Enden in die Vertiefungen (11,14) der Schienen (5,6) eingebracht und ohne den Einsatz von gesonderten Kontaktteilen direkt elektrisch leitend mit denselben verschweißt werden und bei welchem die Vertiefungen (11,14) jeweils mit einer etwa kreisförmigen lichten Weite und einer in Umfangsrichtung verlaufenden Wandung (13) als begrenzende Fläche für einen in einer Vertiefung (11,14) angeordneten elektrischen Leiter (4) ausgerüstet werden.

2. Anordnung zur Durchführung des Verfahrens nach Anspruch 1, **dadurch gekennzeichnet, dass** die Vertiefungen (11) als durch einen Boden (12) verschlossene Hülsen bzw. Näpfe ausgeführt sind.

3. Anordnung zur Durchführung des Verfahrens nach Anspruch 1, **dadurch gekennzeichnet, dass** die Anschlußpunkte (7,8) zumindest teilweise als Durchgangslöcher (14) ausgeführt sind.

## Claims

1. A method for supplying power from electrical consumers (3) of a motor vehicle (1), in which at least two components consisting of electrically conductive material and available in the motor vehicle (1) are used, to which electrical conductors (4) connected to the consumers are electrically conductively connected, in which the components are connected in the position of use to a voltage source (2) of the motor vehicle (1), in which rails (5, 6) consisting of aluminum or an aluminum alloy as components are arranged in the motor vehicle (1) which are equipped along their entire length with connection points (7, 8) arranged at a distance from one another, which are provided for the electrically conductive connection of electrical conductors (4), in which rails (5, 6) with roughly rectangular cross section are used as components are formed in their course before their assembly such that they are adapted to the shape of the motor vehicle (1) at the assembly site and the prepared connection points (7, 8) of which are designed as depressions (11, 14) arranged in the material of the rails (5, 6), in which the electrical conductors (4) consisting of aluminum or an aluminum alloy are introduced with their front ends into the depressions (11, 14) of the rails (5, 6) and are directly welded without the use of special contact parts electrically conductively with the same and in which the depressions (11, 14) are in each case equipped with an approximately circular clear width and a wall (13) running in the circumferential direction as a limiting surface for an electrical conductor (4) arranged in a depression (11, 14).

2. An arrangement for carrying out the method according to claim 1, **characterized in that** the depressions (11) are designed as a sleeve or tube closed by a bottom (12).

3. The arrangement for carrying out the method according to claim 1, **characterized in that** the connection points (7, 8) are designed at least partially as through holes (14).

## Revendications

1. Procédé d'alimentation électrique de consommateurs électriques (3) d'un véhicule automobile (1), dans lequel sont utilisés au moins deux composants présents dans le véhicule automobile (1), constitués d'un matériau électro-conducteur, auxquels sont raccordés, de manière électro-conductrice, des conducteurs électriques (4) reliés avec les consommateurs, dans lequel les composants sont reliés, en position d'utilisation, avec une source de tension (2) du véhicule automobile (1), dans lequel, en tant que composants en aluminium ou en tant que composants constitués d'un alliage d'aluminium, sont disposés, dans le véhicule automobile (1), des rails (5, 6) qui sont munis, sur toute leur longueur, de points de raccordement préparés (7, 8), réalisés à distance les uns des autres, pour le raccordement électro-conducteur de conducteurs électriques (4), dans lequel, en tant que composants, sont utilisés des rails (5, 6) avec une section approximativement rectangulaire, qui, avant leur montage, sont façonnés de façon à être adaptés à la forme du véhicule automobile (1) à l'emplacement du montage et leurs points de raccordement préparés (7, 8) sont conçus au moins comme des renfoncements (11, 14) réalisés dans le matériau des rails (5, 6), dans lequel les conducteurs électriques (4), constitués d'aluminium ou d'un alliage d'aluminium, sont insérés, dans leurs extrémités frontales, dans les renfoncements (11, 14) des rails (5, 6) et soudés avec ceux-ci, sans utiliser de pièces de contact spéciales, de manière directement électro-conductrice et dans lequel les renfoncements (11, 14) sont munis chacun d'une forme approximativement circulaire et d'une paroi (13) s'étendant dans la direction de la circonférence, en tant que surface de limitation pour un conducteur électrique (4) disposé dans un renfoncement (11, 14).

2. Dispositif pour l'exécution du procédé selon la revendication 1, **caractérisé en ce que** les renfoncements (11) sont conçus comme des douilles ou des alvéoles fermées par un fond (12).

3. Dispositif pour l'exécution du procédé selon la revendication 1, **caractérisé en ce que** les points de raccordement (7, 8) sont conçus au moins partiellement comme des trous traversants (14).
